# EUROPÄISCHE PATENTANMELDUNG

(11) **EP 2 208 541 A2**
(43) Veröffentlichungstag der Anmeldung: **21.07.2010**
(21) Anmeldenummer: 10000232.8
(22) Anmeldetag: 12.01.2010
(51) Int. Cl.: B05B 13/04

(54) **Verfahren zum Beschichten, insbesondere Lackieren, einer Oberfläche sowie digitales Beschichtungssystem**

(30) Priorität: 16.01.2009 DE 102009004878
(71) Anmelder: Bauer, Jörg R., 88250 Weingarten (DE)
(72) Erfinder: Bauer, Jörg R., 88250 Weingarten (DE)
(74) Vertreter: Kramer - Barske - Schmidtchen

(57) **Zusammenfassung**

Es wird ein Verfahren zum Beschichten, insbesondere Lackieren, einer Oberfläche (24) mittels eines Auftragsbauteils (10) mit einer Mehrzahl von Düsen (12), die tröpfchenweise Flüssigkeit abspritzen, beschrieben, wobei die Anzahl der Düsen (12), deren Abspritzrichtung und Abspritzmenge derart aufeinander abgestimmt sind, dass das Auftragsbauteil (10) einen Flüssigkeitsstrahl mit einem Kernstrahl, der bei seinem Auftreffen auf die Oberfläche (24) einen Kernbereich zumindest annähernd homogen beschichtet, und einem den Kernstrahl zumindest teilweise umgebenden Randstrahl aufweist, der bei seinem Auftreffen auf die Oberfläche (24) einen den Kernbereich zumindest teilweise umgebenden Randbereich mit einer Flüssigkeitsmenge je Flächeneinheit beschichtet, die mit zunehmender Entfernung vom Rand des Kernbereiches innerhalb eines vorbestimmten Randmaßes auf Null abnimmt.

## Beschreibung

Die Erfindung betrifft ein Verfahren zum Beschichten, insbesondere Lackieren, einer Oberfläche mittels eines Auftragsbauteils mit einer Mehrzahl von Düsen, die tröpfchenweise Flüssigkeit abspritzen. Die Erfindung betrifft weiter ein digitales Beschichtungssystem mit einem solchen Auftragsbauteil.

Beim maschinellen Lackieren von Oberflächen, beispielsweise Fahrzeugkarosserien, werden üblicherweise an Roboterarmen montierte Sprühdüsen verwendet, die einen durch Vermischen von Luft mit Färbeflüssigkeit erzeugten Sprühnebel erzeugen, der auf die zu lackierende Oberfläche gelangt, während diese relativ zu der bzw. den Sprühdüsen bewegt wird. Damit ein möglichst großer Teil des Sprühnebels auf die zu lackierende Oberfläche gelangt, werden die Färbeflüssigkeit und die zu lackierende Oberfläche elektrisch gegensinnig aufgeladen, so dass der Niederschlag des Sprühnebels elektrostatisch unterstützt wird. Dennoch besteht bei den bekannten Verfahren das Problem, dass ein nicht zu vernachlässigender Anteil der Färbeflüssigkeit nicht auf die zu lackierende Oberfläche gelangt und durch aufwendige Absaug- und Wiederaufbereitungsverfahren zurück gewonnen werden muss. Des Weiteren kann die Dicke der Lackierschicht nur schwer in genau vorbestimmter Weise verändert werden, beispielsweise indem vorbestimmte Bereiche dicker lackiert werden.

Zum Bedrucken von Oberflächen mit vorbestimmten Mustern sind seit vielen Jahren digitale, programmgesteuerte Druckverfahren, beispielsweise Tintenstrahldruckverfahren bekannt, bei denen aus einem oder mehreren Auftragsbauteilen mit jeweils einer Mehrzahl von Düsen tröpfchenweise Flüssigkeit auf eine zu bedruckende Oberfläche abgespritzt wird. Ein homogenes, flächiges Lackieren von Oberflächen mittels solcher digitaler Druckverfahren, beispielsweise Tintenstrahldruckverfahren, führte bisher nicht zum Erfolg.

Der Erfindung liegt die Aufgabe zugrunde, ein Verfahren und ein System zum Beschichten, insbesondere Lackieren, von Oberflächen zu schaffen, mit dem es möglich ist, auch große Oberflächen homogen und unter hoher Ausnutzung der verwendeten Flüssigkeit in wohl definierter Weise zu beschichten.

Eine erste Lösung dieser Aufgabe wird mit einem Verfahren gemäß dem Anspruch 1 erreicht.

Dieses Verfahren wird mit dem Merkmal der Ansprüche 2 bis 6 in vorteilhafter Weise weitergebildet.

Der Anspruch 8 kennzeichnet ein digitales Beschichtungssystem zur Lösung des diesbezüglichen Teils der Erfindungsaufgabe.

Die Ansprüche 8 bis 10 sind auf vorteilhafte Ausführungsformen des erfindungsgemäßen Systems gerichtet.

Die Erfindung, die in unterschiedlichsten Anwendungen zum Beschichten und/oder Lackieren von Oberflächen einsetzbar ist, wird im Folgenden anhand schematischer Zeichnungen beispielsweise und mit weiteren Einzelheiten erläutert.

In den Zeichnungen stellen dar:
- Fig. 1: eine Prinzipansicht einer an sich bekannten Vorrichtung zur Durchführung eines Tintenstrahldruckverfahrens,
- Fig. 2 bis 5: Beispiele für erfindungsgemäße Flüssigkeitsstrahlgeometrien,
- Fig. 6: eine Prinzipansicht zur Erläuterung einer erfindungsgemäßen Beschichtung einer Oberfläche,
- Fig. 7: eine Skizze zur Erläuterung unterschiedlicher Überlappungen von Randbe- reichen,
- Fig. 8: eine Skizze eines Systems zum Beschichten von Oberflächen insbesondere großer Bauteile,
- Fig. 9: eine Skizze zur weiteren Erläuterung der Arbeitsweise des Systems gemäß Fig. 8.

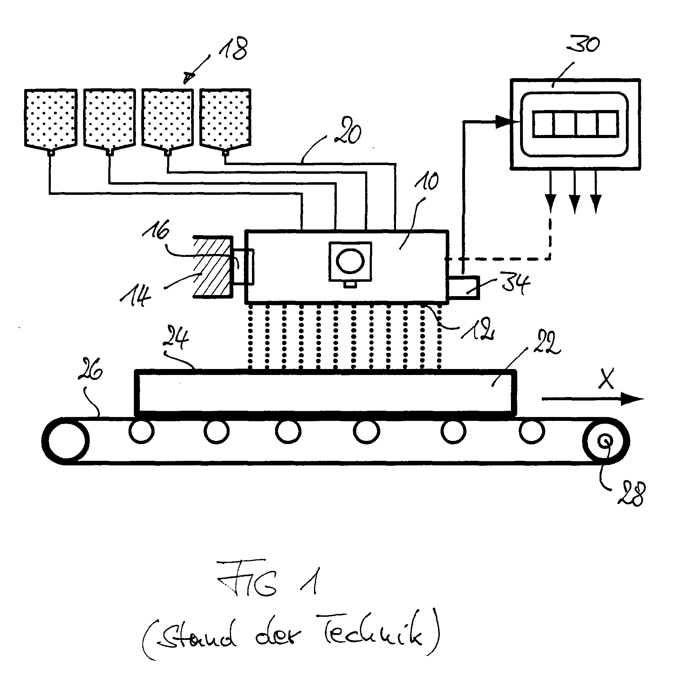

Fig. 1 zeigt eine Prinzipansicht eines an sich bekannten Systems zur Tintenstrahlbedruckung von Oberflächen. Gemäß Fig. 1 weist ein Auftragsbauteil 10 an seiner Unterseite eine Vielzahl von Düsen 12 auf. Das Auftragsbauteil 10 ist an einer ortsfesten Struktur 14 mittels einer Antriebseinheit 16 beispielsweise in senkrecht auf der Zeichnungsebene stehender Richtung und in gemäß der Zeichnung senkrechter Richtung bewegbar.

Ein Flüssigkeitsvorrat 18 enthält einen Vorrat von im dargestellten Beispiel 4 Färbeflüssigkeiten, die jeweils über Leitungen 20 dem Auftragsbauteil 10 zuführbar sind.

Die Düsen 12 sind wahlweise oder permanent mit jeweils einer der Leitungen 20 verbunden und derart steuerbar, dass aus ihnen in zeitlich vorbestimmter Weise Flüssigkeitströpfchen abgespritzt werden, die vorzugsweise ein konstantes Volumen haben.

Den Düsen 12 gegenüber befindet sich ein Gegenstand 22 mit einer Oberfläche 24, die mittels des Auftragsbauteils 10 bedruckt werden soll. Der Gegenstand 22 befindet sich im dargestellten Beispiel auf einem umlaufenden Transportband 26, das mittels eines Motors, vorzugsweise eines Elektromotors 28 antreibbar ist, so dass der Gegenstand 22 im dargestellten Beispiel in Richtung des Pfeils X oder in Gegenrichtung dazu bewegbar ist.

Zur Steuerung des Auftragsbauteils 10, der Antriebseinheit 16 und des Motors 28 ist eine elektronische Steuereinrichtung 30 vorgesehen, deren Ausgänge 32 mit den genannten Einheiten verbunden sind.

Vorzugsweise ist eine Sensoreinrichtung 34 vorgesehen, mit der die Position des Gegenstandes 22 relativ zum Auftragsbauteil 10 bestimmbar ist und deren Ausgang mit einem Eingang der Steuereinrichtung 30 verbunden ist.

Die Steuereinrichtung 30 enthält ein Programm, entsprechend dem die Relativbewegung zwischen dem Auftragsbauteil 10 und dem Gegenstand 22 sowie koordiniert dazu das Abspritzen von Flüssigkeitströpfchen aus den Düsen 12 gesteuert wird, so dass auf der Oberfläche 24 ein in der Steuereinrichtung 30 abgelegtes Muster gedruckt wird.

Im Allgemeinen ist die Breite (senkrecht zur Zeichnungsebene gemessen) des Auftragsbauteils 10 kleiner als die Breite der zu beschichtenden Oberfläche 24. Der Begriff Beschichtung umfasst im Folgenden das Aufbringen aller Arten von Flüssigkeiten auf die Oberfläche, die mittels eines digitalen Aufbringverfahrens, beispielsweise Tintenstrahlverfahrens (bubble jet) aufbringbar sind und nach dem Aufbringen selbsttätig, beispielsweise durch Verdampfen, oder mittels zusätzlicher Hilfsmittel, beispielsweise UV-Bestrahlung, sich verfestigen. Solche Flüssigkeiten können Färbeflüssigkeiten bzw. Lacke, farblose Flüssigkeiten zum Erzeugen einer verschleißfesten Oberfläche, Funktionsflüssigkeiten mit spiegelnden oder elektrisch leitfähigen oder magnetischen Eigenschaften sowie Flüssigkeiten sein, die getrennt voneinander aufgebracht werden und die bei gegenseitiger Berührung aushärten usw.

Wenn die mit Düsen 12 bestückte Unterseite des Auftragsbauteils 10 kleiner ist als die zu beschichtende Oberfläche 24 muss das Beschichten in mehreren Arbeitsgängen erfolgen, beispielsweise indem das Auftragbauteil 10 relativ zur Oberfläche 24 längs unterschiedlicher Bahnen bewegt wird. Dabei stellt sich das Problem, dass bei nicht ausreichender Präzision der Relativbewegung die während des Abfahrens der einzelnen Bahnen aufgebrachten Beschichtungen sich unterschiedlich überlappen, wodurch die Dicke der aufgebrachten Beschichtung, beispielsweise Farbschicht, unterschiedlich ist, was das Aussehen, die Haltbarkeit usw. der beschichteten Oberfläche nachteilig beeinflusst.

Das Auftragsbauteil 10 ist vorteilhafterweise mit Düsen 12 in einer Flächendichte derart versehen, dass sich die von benachbarten Düsen abgestrahlten Flüssigkeitströpfchen auf einer zu beschichtenden Oberfläche überlappen oder zumindest ineinander fließen. Erfindungsgemäß werden die Düsen derart angesteuert, dass ein insgesamt von dem Auftragsbauteil 10 abgestrahlter Flüssigkeitsstrahl einen Kernstrahl enthält, innerhalb dessen die Flüssigkeitströpfchen in einer Dichte derart abgestrahlt werden, dass der vom Kernstrahl getroffene Bereich der beschichtenden Oberfläche mit einer zumindest annähernd homogenen Beschichtung von zumindest annähernd gleichmäßiger Dicke versehen wird. Der Kernstrahl wird zumindest teilweise von einem Randstrahl umgeben, in dem die Dichte der Flüssigkeitströpfchen, d. h. die durch ein Querschnittsflächenelement des Flüssigkeitsstrahls hindurchgelangenden Flüssigkeitströpfchen mit zunehmender Entfernung vom Kernstrahl abnimmt, so dass ein von diesem Randstrahl bzw. Randstrahlbereich getroffener Oberflächenbereich nicht flächig oder zumindest mit einer kleineren Flüssigkeitsmenge je Flächeneinheit beschichtet wird.

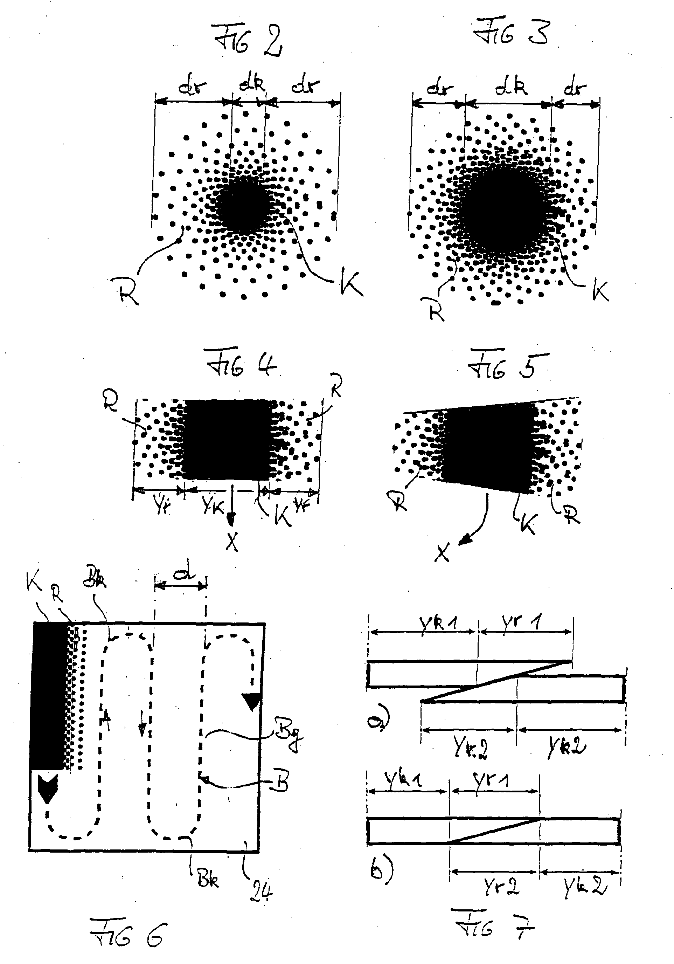

Fig. 2 zeigt ein Beispiel. Dargestellt ist schematisch das Auftreffen von Flüssigkeitströpfchen auf einen Oberflächenbereich innerhalb eines kurzen Zeitraums. Jeder Punkt stellt ein Flüssigkeitströpfchen dar. Wie ersichtlich, wird ein Kernbereich K mit einem Durchmesser dk von den einzelnen Flüssigkeitströpfchen überdeckend homogen beschichtet, wohingegen ein den Kernbereich umgebender Randbereich R von Flüssigkeitströpfchen getroffen wird, deren Anzahl je Flächeneinheit mit zunehmenden Abstand vom Kernbereich K innerhalb der Strecke dr auf Null abnimmt. Insgesamt bildet der Flüssigkeitsstrahl somit einen wohldefinierten "digitalen Nebel", der unter weitgehender Ausnutzung der in ihm enthaltenen Flüssigkeit auf der Oberfläche abgeschieden wird.

Fig. 3 zeigt ähnliche Verhältnisse, wobei der Durchmesser des Kernbereiches K gegenüber dem der Fig. 2 größer ist und die Breite dr des Randbereichs R kleiner ist.

Eine Ausbildung des vom Auftragsbauteil 10 abgestrahlten Flüssigkeitsstrahls gemäß der Fig. 2 oder 3 lässt sich in einfacher Weise durch entsprechende Ansteuerung der Düsen 12 des Auftragsbauteils 10 erzielen, wobei der Kernstrahl erzeugt wird, indem eine große Anzahl von Düsen je Flächeneinheit aktiviert wird und im Bereich des Randstrahls die Flächendichte der aktivierten Düsen auf Null abnimmt.

Die Geometrie des Flüssigkeitsstrahls kann, wenn das Auftragsbauteil mit einer entsprechend großen Anzahl von Düsen je Flächeneinheit versehen ist, weitgehend frei eingestellt werden und richtet sich vorteilhafterweise nach der Relativbewegung zwischen dem Auftragsbauteil 10 und der zu beschichtenden Oberflächen 24. Bei einer gradlinigen Relativbewegung (Pfeil X) zwischen Auftragsbauteil 10 und zu beschichtender Oberfläche 24 hat der Kernbereich K vorteilhafterweise eine rechteckige Form (Fig. 4), wobei die Kanten des Rechtecks senkrecht und parallel zur Richtung der Relativbewegung sind. Der Randstrahl ist in diesem Fall vorteilhafterweise lediglich beidseitig des Kernstrahls quer zur Bewegungsrichtung X ausgebildet. Die rechteckige Form des Kernbereiches K bewirkt, dass die zu beschichtende Oberfläche in Bewegungsrichtung homogen beschichtet wird, wobei die Erstreckung des Kernbereiches und der Randbereiche in Längsrichtung der Bewegung abhängig von der erwünschten Beschichtungsdicke und den Möglichkeiten des Auftragsbauteils gewählt werden können. Die Erstreckung des Kernbereiches quer zur Bewegungsrichtung ist in Fig. 4 mit yk bezeichnet, die Erstreckung der beidseitig des Kernbereiches ausgebildeten Randbereiche ist mit yr bezeichnet.

Die genauere Strukturierung des Kernstrahls kann derart sein, dass sich bei fehlender Relativbewegung zwischen zu beschichtender Oberfläche und Auftragsbauteil die einzelnen Flüssigkeitströpfchen innerhalb des Kernbereiches in Richtung quer zur späteren Relativbewegung von vornherein überlappen oder zumindest überlappen, wenn die Flüssigkeitströpfchen auf der Oberfläche in Folge von deren Diffusibilität vor dem Trocknen in ihrer Fläche um ein bestimmtes Maß zunehmen, wohingegen der Abstand der Flüssigkeitströpfchen in Richtung der späteren Relativbewegung derart sein kann, dass sich die Flüssigkeitströpfchen bei fehlender Relativbewegung noch nicht überlappen und die Überlappung erst in Folge der während der Relativbewegung mehrfach auf ein Flächenelement aufgetragenen Flüssigkeitströpfchen erfolgt. Innerhalb des Kernstrahls kann somit der Abstand zwischen den Flüssigkeitströpfchen in Richtung der Relativbewegung größer sein als quer zur Relativbewegung. Wenn das Auftragsbauteil 10 nur eine sich quer zur Richtung der Relativbewegung erstreckende Düsenreihe aufweist, so werden deren Düsen im Kernbereich derart angesteuert, dass sich benachbarte Flüssigkeitströpfchen im Kernbereich überlappen, wohingegen die Flüssigkeitströpfchen im Randbereich einen zunehmenden Abstand voneinander aufweisen.

Wenn die Bewegungsbahn der Relativbewegung, wie in Fig. 5 dargestellt, gekrümmt ist, bilden der Kernbereich K und die angrenzenden Randbereiche R vorteilhafter Weise einen Kegelstumpf, der sich zur Innenseite der gekrümmten Bahn hin verjüngt, wobei der Kegelwinkel von der Krümmung abhängt. Mit dieser Form des Kernbereiches und der Randbereiche wird eine gleichmäßige Beschichtung der gekrümmten, beschichteten Bahn erzielt.

Fig. 6 stellt eine Aufsicht auf eine zu beschichtende Oberfläche 24 dar, wobei eine insgesamt mäanderförmige Bewegungsbahn B, längs der sich das Zentrum des Kernbereiches relativ zur Oberfläche 24 bewegt, mit B bezeichnet ist. Die Bewegungsbahn ist aus geradlinigen Abschnitten Bg und gekrümmten Abschnitten Bk zusammengesetzt. Zwei benachbarte Bahnen Bg, längs derer die Oberfläche 24 beschichtet wird, haben vorteilhafterweise einen Abstand d, dessen Sollwert größer ist als die Abmessung yk des Kernstrahls K quer zur Bewegungsrichtung X. Damit wird erreicht, dass sich die Kernbereiche nicht überlappen.

Eine Überlappung würde dazu führen, dass im Überlappungsbereich eine erheblich zu große Flüssigkeitsmenge aufgetragen würde, was zu inhomogener Schichtdicke, Problemen beim Trocknen, Problemen hinsichtlich der Festigkeit der Schicht, beispielsweise einer Lackschicht, usw. führen würde. Der zwischen den Kernbereichen freibleibende Bereich wird zweifach von einem Randstrahl getroffen, wodurch die vorstehende Problematik gemildert wird.

Fig. 7 zeigt zwei Beispiele unterschiedlicher Überlappung. Dargestellt sind jeweils die Abmessung des Kernbereiches yk quer zur Richtung der Relativbewegung und die Abmessung eines einseitig an den Kernbereich anschließenden Randbereiches yr. Der auf der anderen Seite des Kernbereiches anschließende Randbereich ist der Einfachheit halber nicht dargestellt. Der Index 1 bezeichnet den ersten Arbeitsgang. Der Index 2 bezeichnet den zweiten Arbeitsgang, d. h. eine nachfolgende benachbarte Bahn. Im Figurenteil a) der Fig. 7 sind die Bahnen derart voneinander entfernt, dass die Randbereiche yr1 und yr2 die Kernbereiche yk2 bzw. yk1 des jeweils anderen Arbeitsgangs überlappen. Wie ersichtlich, ist die Beschichtungsstärke in dem gesamten Bereich zwischen den vom jeweiligen Kernbereich abgewandten Rändern der Randbereiche größer als im Kernbereich, liegt jedoch unter dem doppelten Wert des Kernbereiches.

Fig. 7b zeigt die Verhältnisse, bei denen die Entfernung zwischen den Kernbereichen yk1 und yk2 genauso groß ist wie die Breite der Randbereiche yr1 und yr2. Wie aus Fig. 3b unmittelbar ersichtlich, wird über die gesamte Breite eine einheitliche Schichtdicke erreicht.

Aus Gründen geringerer Toleranzempfindlichkeit ist es daher vorteilhaft, wenn benachbarte Bahnen einen Sollabstand d haben, der etwa gleich der Summe aus yk und yr ist.

Für den Fall, dass der Abstand größer ist als gemäß Fig. 3b ergibt sich zwischen den Kernbereichen ein Bereich geringerer Schichtdicke.

Insgesamt läuft die Beschichtung der Oberfläche 24 wie folgt ab:
Es sei angenommen, die Beschichtung beginne gemäß Fig. 6 links oben. Der Farbstrahl wird derart eingestellt, dass er die Konfiguration gemäß Fig. 4 ohne den gemäß Fig. 4 linken Randbereich R hat. Die Sollposition des Auftragsbauteils 10 relativ zur Oberfläche 24 zu Beginn der Beschichtung ist derart, dass die Kontur des Kernbereiches K gemäß Fig. 4 mit der Kontur der linken oberen Ecke der Oberfläche 24 gemäß Fig. 6 fluchtet. Das Auftragsbauteil bewegt sich dann längs des linken Randes der Oberfläche 24 relativ zu dieser gemäß Fig. 6 abwärts bis zum ersten gekrümmten Bahnbereich. Während die Bewegung längs des gekrümmten Bahnbereiches erfolgt, bleibt der Kernbereich K entweder unverändert, wie in Fig. 4 dargestellt, oder wird derart verändert, dass der Kernbereich während des Durchfahrens des gekrümmten Bahnbereiches so verändert wird, dass er an die Kontur der Oberfläche 24 angepasst wird. Im ersteren Fall gelangt ein Teil der im Kernbereich abgespritzten Flüssigkeit nicht auf die Oberfläche 24. Im zweiten Fall gelangt ständig die gesamte Flüssigkeit auf die Oberfläche 24. Vor Beendigung des Durchfahrens des gekrümmten Bahnbereiches wird der Flüssigkeitsstrahl in die Konfiguration der Fig. 4 eingestellt, in der beidseitig des Kernbereiches K Randbereiche R ausgebildet sind. Bei der gemäß Fig. 6 Aufwärtsbewegung längs eines geradlinigen Bahnbereiches Bg überlappt der linke Randbereich R den vorher aufgebrachten rechten Randbereich R, so dass der Bereich der Oberfläche 24, der von beiden Randbereichen R überdeckt wird, mit etwa der gleichen Flüssigkeitsmenge beschichtet wird, wie ein Bereich, der nur von einem Kernbereich überstrichen wird. Die Beschichtung setzt sich entsprechend fort, wobei jeweils bei Durchfahren eines gekrümmten Kurvenbereiches Bk vorzugsweise der kurvenäußere Randbereich abgeschaltet wird und der Kernbereich dynamisch an den jeweiligen Rand der Oberfläche 24 angepasst wird.

Die anhand der Fig. 6 beispielhaft erläuterte digitale Beschichtung kann zum hochwertigen Lackieren großflächiger Oberflächen eingesetzt werden. Steuerparameter sind Abgabe der je Düse zeitlich abgegebenen Farbmenge bzw. Anzahl der Farbtröpfchen, Relativgeschwindigkeit zwischen Auftragsbauteil und Oberfläche, Geometrie des Farbstrahls, (Kernstrahl, Randstrahlen) Anpassung der Strahlgeometrie an Ränder der zu lackierenden Oberfläche usw.

Die beispielhaft geschilderte Beschichtung kann vielfältig abgeändert werden:

Anstelle einer mäanderförmigen Führung der Relativbewegung können auch andere Geometrien gewählt werden, mit denen die zu beschichtende bzw. lackierende Oberfläche überstrichen wird. Die Abnahme der Farbmenge im Randbereich von 100 % (Kernbereich) auf Null muss nicht linear erfolgen, sondern kann progressiv oder degressiv erfolgen. Es können mehrere Auftragsbauteile in beliebiger Anordnung verwendet werden.

Die Oberfläche 24 kann auch derart beschichtet werden, dass das Auftragsbauteil 10 längs zueinander paralleler Bahnen ohne die gekrümmten Bereiche Bg nacheinander über die Oberfläche 24 geführt wird. Die Düsen des Auftragsbauteils 10 werden dann bei oder kurz vor Erreichen eines Randes der Oberfläche 24 angeschaltet und bei bzw. unmittelbar nach Verlassen des gegenüberliegenden Randes der Oberfläche 24 abgeschaltet. Die gemäß Fig. 6 linksseitige Bahn hat ein Strahlprofil, wie dargestellt, d.h. einen Kernstrahl, an den nur rechtsseitig ein Randstrahl angrenzt. Die nachfolgenden Bahnen haben ein Profil gemäß Fig. 4, wohingegen die rechtsseitige Bahn ein Profil hat, das nur rechts einen Kernstrahl aufweist, an den linksseitig ein Randstrahl bzw. Randbereich angrenzt.
Mit der beispielhaft beschriebenen Beschichtungstechnologie können große Flächen mittels der Tintenstrahltechnologie weitestgehend homogen und mit vorbestimmter, gegebenenfalls in vorbestimmter Weise veränderbarer Schichtdicke lackiert oder beschichtet werden, wobei Toleranzen in der Relativbewegung zwischen Auftragsbauteil und zu lackierender bzw. beschichtender Oberfläche durch die Erzeugung eines Flüssigkeitsstrahls mit einem Kernbereich homogener Flüssigkeitsdichte und wenigstens einem Randbereich abnehmender Flüssigkeitsdichte ausgeglichen bzw. weitgehend kompensiert werden können. Die Dicke der aufgebrachten Schicht kann einfach dadurch variiert werden, dass die relative Geschwindigkeit und/oder die je Zeiteinheit abgespritzte Flüssigkeitsmenge verändert werden. Die zu beschichtende Oberfläche kann eben oder gewölbt sein, wobei bei gewölbten Oberflächen vorteilhafter Weise ein zumindest annähernd konstanter Abstand zwischen den Düsen des Auftragsbauteils und der zu beschichtenden Oberfläche eingehalten wird.

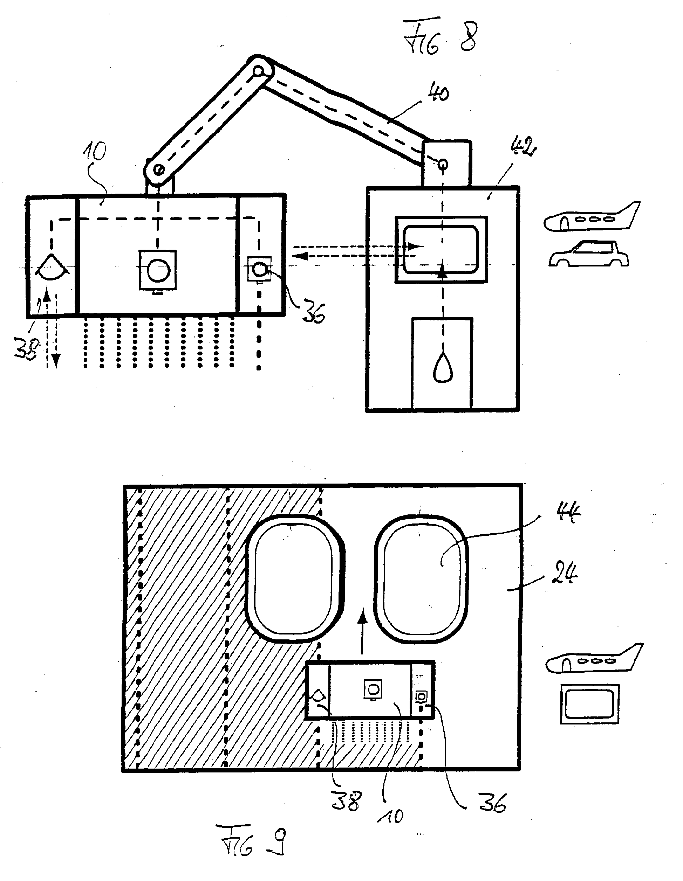

Anhand der Figuren 8 und 9 wird im Folgenden ein System beschrieben, mit dem großflächige Gegenstände, wie beispielsweise Flugzeuge oder Automobile, digital lackiert werden können. Das System enthält ein Auftragsbauteil 10 mit Düsen, aus denen Farbflüssigkeitströpfchen digital gesteuert abgespritzt werden können. Das Auftragbauteil 10 enthält weiter eine Markierungsdüse 36 aus der Markierungsflüssigkeitströpfchen abgespritzt werden können. Weiter ist mit dem Auftragsbauteil 10 eine Sensorik bzw. Abtasteinheit 38 starr verbunden, mit der beispielsweise ein Farbwert, ein Abstand und das Material einer Oberfläche erfasst werden können. Das Auftragbauteil 10 ist zusammen mit der Markierungsdüse 36 und der Abtasteinheit 38 an einem Roboterarm 40 befestigt, mit dem das Auftragsbauteil 10 in weitgehend jede Position verschwenkt und bewegt werden kann und der eine Halterung für das Auftragsteil 10 bildet.

Der Roboterarm 40 mit dem gesamten darin befestigten Farbauftragssystem mit dem in Fig. 12 nicht dargestellten Flüssigkeitsvorrat, dem Auftragsbauteil 10, der Markierungsdüse 36 und der Abtasteinheit 38 sowie dem Roboterarm 40 wird von einer elektronischen Steuereinrichtung 42 gesteuert, deren Grundaufbau mit Programmspeicher, Datenspeicher, Prozessor usw. an sich bekannt ist.

Die Oberfläche eines zu lackierenden Gegenstandes, beispielsweise Flugzeugs, wird hinsichtlich ihrer Geometrie in an sich bekannter Weise beispielsweise durch Auswertung optischer Daten in der Steuereinrichtung 42 abgelegt. Weiter ist in der Steuereinrichtung 42 die Geometrie der auf der Flugzeugoberfläche aufzubringenden Lackierung abgelegt. Die Umrandung der Geometrie, beispielsweise eines großflächigen Schriftzugs, kann derart markiert sein, dass sie von der Abtasteinheit 38 erfasst werden kann. Der Roboterarm 40 wird nun zunächst durch eine Grobsteuerung derart gesteuert, dass er die auf der zu lackierenden Oberfläche befindliche Konturierung mit der Abtasteinheit 38 erkennt und wird dann von der Abtasteinheit 38 gesteuert weiter längs der Konturierung bewegt. Während dieser Bewegung wird von der Markierungsdüse 36 eine Markierung auf die zu lackierende Oberfläche aufgebracht, beispielsweise durch Abspritzen einer nicht sichtbaren Spur aus transparenter Flüssigkeit, die magnetisierte Teilchen enthält. Wenn die Bewegungsbahn längs der vormarkierten Konturierung beendet ist, kann der Roboterarm 40 um eine vorbestimmte Strecke senkrecht zur Außenkonturlinie der aufzubringenden Lackierung einwärts in Richtung zur Lackierungsfläche bewegt werden, bis die Abtasteinheit 38 die bei der gerade aufgebrachten Lackierungsbahn aufgebrachte Flüssigkeitsspur als eine Führungsspur für die nachfolgende Führung des Auftragsbauteils erkennt.

Fig. 9 verdeutlicht den Vorgang. Während des Aufbringens einer beispielsweise der Breite des Auftragsbauteils 10 bzw. der zur Bewegungsrichtung senkrechten Erstreckung von dessen Düsen entsprechenden Lackierbahnen wird jeweils von der Markierungsdüse 36 eine gestrichelte Führungsspur aufgebracht, längs der bei einer nachfolgend aufgebrachten Lackierbahn des Auftragsbauteils 10, von der Abtasteinheit 38 geführt, bewegt wird. Fenster 44 oder sonstige innerhalb der zu lackierenden Fläche vorhandene, nicht zu lackierende Bereiche werden von der Abtasteinheit 38 erkannt und das Auftragsbauteil 10 wird über diese Bereiche, deren Erstreckung verhältnismäßig kurz ist, von der Steuereinrichtung 42 gesteuert, bewegt, wobei die Düsen durch das Auftragsbauteil 10 so gesteuert werden, dass die Lackierung nur zwischen den Fenstern erfolgt. Mit Hilfe der Führungsspur ist es möglich, den Roboterarm 40 trotz erheblicher, in seinem Antrieb vorhandener Toleranzen derart zu steuern, dass sich das Auftragsbauteil 10 präzise längs vorbestimmter Bahnen bewegt.

Die Markierung der zu lackierenden Oberfläche während eines Druckdurchlaufes kann in unterschiedlichster Weise erfolgen, wobei in vorbestimmten Abständen lediglich einzelne Punkte gesetzt werden können, die von der Abtasteinheit 34 erfasst werden und jeweils dazu dienen, dass eine in der Steuereinrichtung 38 abgelegte Grobsteuerung aktualisiert wird.

Vorteilhafterweise erfolgt das Lackieren der großflächigen Oberfläche 24, beispielsweise einer Flugzeugoberfläche, gemäß Fig. 9 längs Bahnen, die die zu lackierende Oberfläche insgesamt überdecken, ähnlich wie anhand Fig. 3 erläutert. Längs der Bahnen wird dabei mit einem Flüssigkeitsstrahl lackiert, der einen Kernstrahl und benachbarte Randstrahlen hat, ähnlich wie anhand Figuren 1 bis 3 erläutert. Durch die in den Randbereichen des Flüssigkeitsstrahls überlappende Lackierung werden Toleranzen in der Führung des Roboterarms weitgehend ausgeglichen. Auch bei ungenauer Steuerung der Bewegung des Roboterarms kann die Bewegung des Auftragsbauteils 10 genau erfolgen, indem diese Bewegung entsprechend der von der Abtasteinheit 38 erfassten Markierung geregelt längs der Markierungslinie erfolgt. Die Randstrahlen des Lackierstrahls bzw. die Randbereiche können auf diese Weise verhältnismäßig schmal ausgebildet sein. Bei starker Fließfähigkeit der aufgebrachten Flüssigkeit können die Randbereiche aufgrund der präzisen Steuerung der Bewegung des Auftragsbauteils 10 sogar ganz entfallen.

Mit einem Auftragsbauteil oder mehreren, am Roboterarm angebrachten Auftragsbauteilen können mehrere Farben gleichzeitig lackiert werden, so dass eine Mischfarbe entsteht. Es können auch verschiedene Bereiche der zu lackierenden Oberfläche 24 mit unterschiedlichen Farben lackiert werden, die wegen der Markierung präzise nebeneinander aufgebracht werden können. Die Konturierung bzw. Vormarkierung des zu lackierenden Oberflächenbereiches kann mit den gleichen Markierungsmitteln, beispielsweise Linie aus einem von der Abtasteinheit 38 erfassbaren Material hergestellt sein wie die Markierung, die von der Markierungsdüse 36 aufgebracht wird.

Die beispielhaft beschriebene Vorrichtung kann in vielfältiger Weise abgeändert werden. Beispielsweise kann die Bewegung des Roboterarms 40 mittels grobmotorischer Aktoren gesteuert werden, die rasch und dafür jedoch verhältnismäßig ungenau ihre Sollpositionen anfahren, wohingegen zur Bewegung des Auftragsbauteils 10 zwischen diesem und dem Roboterarm eine Feinmotorik vorgesehen sein kann, die vorzugsweise bei stillstehendem Roboterarm das Auftragsbauteil 10 unter feiner Steuerung bzw. Regelung genau positioniert bzw. bewegt. Weiter kann das Auftragsbauteil 10 zusätzlich zur Abtasteinheit einen oder mehrere mechanische Anschläge, beispielsweise Rollen aufweisen, die einen vorbestimmten Abstand zwischen den Düsen des Auftragsbauteils und der zu beschichtenden Oberfläche sicherstellen und bei der Relativbewegung zwischen Auftragsbauteil und zu beschichtender Oberfläche während der Beschichtung auf der Oberfläche abrollen.

### Bezugszeichenliste

- 10: Auftragsbauteil
- 12: Düse
- 14: Struktur
- 16: Antriebseinheit
- 18: Flüssigkeitsvorrat
- 20: Leitungen
- 22: Gegenstand
- 24: Oberfläche
- 26: Transportband
- 28: Motor
- 30: Steuereinrichtung
- 32: Ausgänge
- 34: Sensoreinrichtung
- 36: Markierungsdüse
- 38: Abtasteinheit
- 40: Roboterarm
- 42: Steuereinrichtung
- 44: Fenster

## Patentansprüche

1. Verfahren zum Beschichten, insbesondere Lackieren, einer Oberfläche (24) mittels eines Auftragsbauteils (10) mit einer Mehrzahl von Düsen (12), die tröpfchenweise Flüssigkeit abspritzen, wobei die Anzahl der Düsen (12), deren Abspritzrichtung und Abspritzmenge derart aufeinander abgestimmt sind, dass das Auftragsbauteil (10) einen Flüssigkeitsstrahl mit einem Kernstrahl, der bei seinem Auftreffen auf die Oberfläche (24) einen Kernbereich zumindest annähernd homogen beschichtet, und einem den Kernstrahl zumindest teilweise umgebenden Randstrahl aufweist, der bei seinem Auftreffen auf die Oberfläche (24) einen den Kernbereich zumindest teilweise umgebenden Randbereich mit einer Flüssigkeitsmenge je Flächeneinheit beschichtet, die mit zunehmender Entfernung vom Rand des Kernbereiches innerhalb eines vorbestimmten Randmaßes auf Null abnimmt.

2. Verfahren nach Anspruch 1, wobei die zu beschichtende Oberfläche (24) und das Auftragsbauteil (10) während des Abspritzens der Flüssigkeitströpfchen längs einer geraden Bahn relativ zueinander mit einer parallel zur Oberfläche (24) gerichteten Bewegungskomponente bewegt werden und der Kernbereich des Flüssigkeitsstrahls über seine sich quer zur Bewegungskomponente erstreckenden Breite eine konstante, sich in Richtung der Bewegungskomponente erstreckende Länge hat.

3. Verfahren nach Anspruch 1, wobei die zu beschichtende Oberfläche (24) und das Auftragsbauteil während des Abspritzens der Flüssigkeitströpfchen relativ zueinander längs einer gekrümmten Bahn mit einer parallel zur Oberfläche (24) gerichteten Bewegungskomponente bewegt werden und der Kernbereich des Flüssigkeitsstrahls eine sich in Richtung der Bewegungskomponente erstreckende Länge hat, die über seine sich quer zur Bewegungskomponente erstreckende Breite zur Innenseite der Krümmung hin abnimmt.

4. Verfahren nach Anspruch 2 oder 3, der Flüssigkeitsstrahl derart ausgebildet ist, dass der Kernbereich nur senkrecht zur Richtung der Relativbewegung von je einem Randbereich umgeben ist.

5. Verfahren nach einem der Ansprüche 2 bis 4, wobei die Oberfläche (24) längs nebeneinander angeordneter Bahnen derart beschichtet wird, dass sich nur die jeder Bahn zugehörigen Randbereiche überlappen.

6. Verfahren nach einem der Ansprüche 2 bis 5, wobei die Düsen (12) beim Beschichten eines Randes der zu beschichtenden Oberfläche (24) derart angesteuert werden, dass der Rand vom Kernbereich des Flüssigkeitsstrahls eingefärbt wird.

7. Digitales Beschichtungssystem, enthaltend
wenigstens eine Auftragseinheit (10) mit mehreren digital ansteuerbaren Düsen (12) zum Abspritzen von Flüssigkeitströpfchen,
eine Flüssigkeitsversorgungseinrichtung zum elektronisch gesteuerten Beschicken der Düsen mit Flüssigkeit,
eine Halterung (40) zum Halten der Auftragseinheit,
eine Antriebseinrichtung zum Bewegen der Halterung längs einer vorbestimmbaren Bahn, eine mit der Auftragseinheit starr verbundenen Markierungseinheit (36) zum Markieren von von der Auftragseinheit überfahrenen Positionen auf einer mittels der Auftragseinheit beschichteten Oberfläche (24),
eine mit der Auftragseinheit starr verbundenen Abtasteinheit (38) zum Erfassen der markierten Positionen und
eine elektronische Steuereinrichtung (42), die die Antriebseinrichtung derart steuert, dass beim Bewegen der Auftragseinheit längs einer vorbestimmten Bahn markierte Positionen bei einer nachfolgenden Bewegung der Auftragseinheit längs einer weiteren vorbestimmten Bahn in vorbestimmter Weise angefahren werden.

8. Beschichtungssystem nach Anspruch 7, wobei die Markierungseinheit (36) Bestandteil der Auftragseinheit (10) ist und die Markierung in einer zumindest teilweise kontinuierlich auf die Oberfläche aufgebrachten Spur besteht.

9. Beschichtungssystem nach Anspruch 7 oder 8, wobei die Steuereinrichtung (42) die Antriebseinheit entsprechend Oberflächendaten vorsteuert und entsprechend den Markierungsdaten feinsteuert.

10. Beschichtungssystem nach einem der Ansprüche 7 bis 9, bei dem die Steuereinrichtung (42) die Düsen (12) des Auftragsbauteils (10) derart ansteuert, dass das Auftragsbauteil einen Flüssigkeitsstrahl mit einem Kernstrahl (K), der bei seinem Auftreffen auf die Oberfläche (24) einen Kernbereich zumindest annähernd homogen beschichtet, und einem den Kernstrahl zumindest teilweise umgebenden Randstrahl (R) abspritzt, der bei seinem Auftreffen auf die Oberfläche einen den Kernbereich zumindest teilweise umgebenden Randbereich mit einer Flüssigkeitsmenge je Flächeneinheit beschichtet, die mit zunehmender Entfernung vom Rand des Kernbereiches innerhalb eines vorbestimmten Randmaßes auf Null abnimmt, wobei die Oberfläche längs nebeneinander angeordneter Bahnen derart beschichtet wird, dass sich nur die jeder Bahn zugehörigen Randbereiche überlappen.
